# EUROPÄISCHE PATENTSCHRIFT

(11) **EP 3 663 574 B1**
(45) Veröffentlichungstag und Bekanntmachung des Hinweises auf die Patenterteilung: **03.02.2021**
(21) Anmeldenummer: 18209971.3
(22) Anmeldetag: 04.12.2018
(51) Int. Cl.: F03D 13/40

(54) **TRANSPORTVORRICHTUNG FÜR EINE ROTORNABE EINER WINDENERGIEANLAGE**
TRANSPORT DEVICE FOR A ROTOR HUB OF A WIND TURBINE
DISPOSITIF DE TRANSPORT POUR UN MOYEU DE ROTOR D'UNE ÉOLIENNE

(43) Veröffentlichungstag der Anmeldung: 10.06.2020
(73) Patentinhaber: Nordex Energy SE & Co. KG, 22419 Hamburg (DE)
(72) Erfinder: Jandt, Holger, 18057 Rostock (DE); Wackrow, Torsten, 18119 Rostock (DE)
(74) Vertreter: Grünbaum, Annekathrin

(56) Entgegenhaltungen:
- WO-A2-2009/036107
- US-A1- 2013 236 304

## Beschreibung

Die vorliegende Erfindung betrifft eine Transportvorrichtung für eine Rotornabe einer Windenergieanlage. Die Transportvorrichtung soll einen sicheren Straßen-, Schienen- und Seetransport der Rotornabe ermöglichen.

Eine Windenergieanlage ist üblicherweise aus einzelnen Komponenten mit einer hohen Masse und sehr großen Abmessungen zusammengesetzt. Die Komponenten können sowohl beispielsweise einzelne Teile des Turms, das Maschinenhaus, die Rotornabe und die Rotorblätter umfassen. Diese genannten Komponenten werden üblicherweise vormontiert, auf eine Transportvorrichtung verbracht und an dieser befestigt. Die Transportvorrichtung mit beispielsweise der Rotornabe wird mit handelsüblichen Trailern und Schwerlast-LKW auf der Straße oder mittels Frachtschiffen auf dem Seeweg transportiert. Dabei sind die Transportabmessungen auf den Standard-Transportfahrzeugen beschränkt, weshalb eine Transportvorrichtung diesen Beschränkungen angepasst sein muss.

Aus EP 2333312 B1 ist eine Transportvorrichtung für Windturbinennaben bekannt, welche eine Nabenaufnahmefläche umfasst. Ein erster Träger und ein zweiter Träger sind über einen Mittelteil miteinander verbunden. Außerdem sind zwischen den Trägern Verbinder vorgesehen, welche ihrerseits Anschlagpunkte zum Anheben der Transportvorrichtung aufweisen. Der Mittelteil weist einen sogenannten Nabenverbinder auf, welcher mit einer Gruppe von Befestigungslöchern versehen ist, die mit den Befestigungslöchern eines Rotorblatts korrespondieren.

In EP 2505823 B1 wird ein Transportrahmen für eine Gondel/ Rotornabeneinheit einer Windkraftanlage offenbart, wobei die Gondel und die Rotornabe miteinander verbunden sind. Der Transportrahmen umfasst einen Hauptträger zum Abstützen des Gewichts der Gondel/Rotornabeneinheit, seitliche Stabilisierungselemente, eine Haltevorrichtung zum Befestigen der Gondel/Rotornabeneinheit und mindestens drei Befestigungspunkte für ein Hebezeug. Mit einer Hubvorrichtung wird eine bereits montierte Gondel/Rotornabeneinheit in den zwischen den seitlichen Stabilisierungselementen gebildeten Raum abgesenkt und die Haltevorrichtung wird an der Gondel befestigt.

EP 2484551 A1 zeigt eine Transportvorrichtung, welche einen Anhänger mit einem vorderen Teil und einem hinteren Teil umfasst, die jeweils einen festen Rahmen, einen beweglichen Rahmen, Hubaktuatoren und ein Verbindungselement aufweisen. Ein Antriebssystem ist zum Drehen der Windanlagen-Komponente vorgesehen, wenn sie an der Transportvorrichtung montiert ist.

EP 2807107 B1 betrifft eine Handhabungsvorrichtung zum Heben einer Rotornabe mittels eines Krans für die Montage der Rotornabe auf einem Windenergieanlagenturm. Dazu ist die Handhabungsvorrichtung so ausgelegt, dass sich die Rotornabe beim Anheben von einer senkrechten Ausrichtung mit im Wesentlichen senkrechter Nabenachse in eine waagerechte Ausrichtung mit im Wesentlichen horizontaler Nabenachse dreht.

US 2013/0236304 A1 offenbart einen Gondelständer für eine Gondel einer Windkraftanlage. Der Gondelständer wird über eine Verbindungsanordnung mit einem am Hauptrahmen der Gondel angeordneten Gier-System verbunden. Der Gondelständer weist ein Mittelteil mit einer Anzahl von Fingern auf, die sich in einer horizontalen Ebene vom Mittelteil weg erstrecken. Das Mittelteil ist in etwa so groß, dass das Gier-System auf diesem befestigt werden kann. Vier Finger sind in jeweils einem Winkel größer als 0 Grad und kleiner als 90 Grad in Bezug auf eine Längsachse des Ständers fest angeordnet, so dass jeweils zwei der Finger V-förmig zueinander stehen. Weitere vier Finger können rechts und links der fest angeordneten Finger ebenfalls in einem Winkel zu diesen angeordnet werden. Dazu sind in dem Mittelteil Öffnungen vorgesehen. Die Finger dienen der Standfestigkeit des Gondelständers, sind aber nicht mit der Gondel oder Teilen der Gondel verbunden. Beim Transport des Gondelständers werden die abnehmbaren Finger separat auf dem Transportfahrzeug hinter dem Gondelständer gelagert.

### Darstellung der Erfindung

Der Erfindung liegt die Aufgabe zugrunde, eine Transportvorrichtung für eine Rotornabe zu entwickeln, welche sowohl in der Produktion, für eine Zwischenlagerung, den Straßentransport und den Seetransport zur Ladungssicherung genutzt werden kann, als auch für die Errichtung und den Rückbau von Windenergieanlagen incl. einer Rückführung von Komponenten, zur Anwendung kommt. Dabei ist vor allem der Umlauf der Transportvorrichtung zur Produktionsstätte und von der Baustelle zurück eine wichtige zu lösende Aufgabe, weshalb die Transportvorrichtung möglichst kompakt sein sollte.

Die Lösung der Aufgabe erfolgt mit den Merkmalen des Hauptanspruchs, wobei die Unteransprüche weitere Ausgestaltungen beschreiben.

Erfindungsgemäß wird eine Transportvorrichtung beschrieben, die den Transport einer Rotornabe mit einer Masse von ca.65t und einer Höhe von ca. 3,8m bei einer Höhenbeschränkung von 4m über den gesamten Lebenszyklus optimal realisiert.

Die Transportvorrichtung für eine Rotornabe umfasst ein Mittelteil und mehrere mit dem Mittelteil verbundene Träger, wobei die Träger als Hauptträger und Nebenträger sternförmig um das Mittelteil angeordnet sind. Die Nebenträger sind lösbar und zeitweise beweglich in Richtung der Hauptträger mit dem Mittelteil verbunden, wodurch die Transportvorrichtung eine kompakte, zusammenklappbare Einheit bildet.

Zwei Hauptträger sind sich gegenüber liegend mit ihren Stirnflächen seitlich am Mittelteil fest angeordnet. Beidseitig neben den Hauptträgern ist jeweils ein Nebenträger mit seiner Stirnfläche mit dem Mittelteil lösbar verbunden und bei Bedarf beweglich angeordnet.

Jeder Nebenträger weist an der Stirnfläche mit dieser fest verbundene Laschen auf, durch welche die Nebenträger mittels Verbindungsmittel mit dem Mittelteil verbunden sind.

Jeder Hauptträger weist in einem definierten Abstand zum Mittelteil jeweils einen Führungsdorn auf, welcher aus dem Obergurt des Hauptträgers herausragt. Neben dem Führungsdorn ist auf jedem Hauptträger jeweils ein Haltemittel angeordnet. Auf jedem Nebenträger sind in dem gleichen definierten Abstand zum Mittelteil weitere Haltemittel, bevorzugt jeweils zwei nebeneinander liegende Haltemittel, angeordnet. Die Führungsdorne und die Haltemittel korrespondieren mit Befestigungslöchern an der Rotornabe. Als Haltemittel können beispielsweise Sechskant-Schrauben zur Anwendung kommen. Durch Bohrungen in unterschiedlichen Abständen zum Mittelteil können die Führungsdorne und die Haltemittel variabel positionierbar sein, um unterschiedlich große Rotornaben transportieren zu können.

Die Transportvorrichtung ermöglicht den Transport einer Rotornabe über den gesamten Lebenszyklus. Dabei wird der beschränkte zur Verfügung stehende Bauraum optimal ausgenutzt. Weiterhin ist es möglich den Transport mit Standard-LKW und Frachtschiffen mit einer einfachen Ladungssicherung vorzunehmen. Für den Rücktransport kann die Vorrichtung optimal verkleinert werden.

Die Transportvorrichtung ist auf einen minimalen Wartungsaufwand hin ausgelegt.

### Ausführung der Erfindung

Die Erfindung wird anhand eines Ausführungsbeispiels erläutert. Hierzu zeigen
Figur 1 eine erfindungsgemäße Transportvorrichtung in einer perspektivischen Darstellung,
Figur 2 die Transportvorrichtung vor dem vollständigen
   Zusammenbau,
Figur 3 eine Schnittdarstellung eines Hauptträgers mit
   angeschraubtem
   Nebenträger,
Figur 4 die zusammengeklappte Transportvorrichtung für eine Rückführung der Vorrichtung in die Produktion,
Figur 5 eine Darstellung einer Anordnung der Rotornabe auf der erfindungsgemäßen Transportvorrichtung,
Figur 6 eine Draufsicht zu der Darstellung in Figur 5,
Figur 7 eine schematische Darstellung für einen Transport auf der Straße.

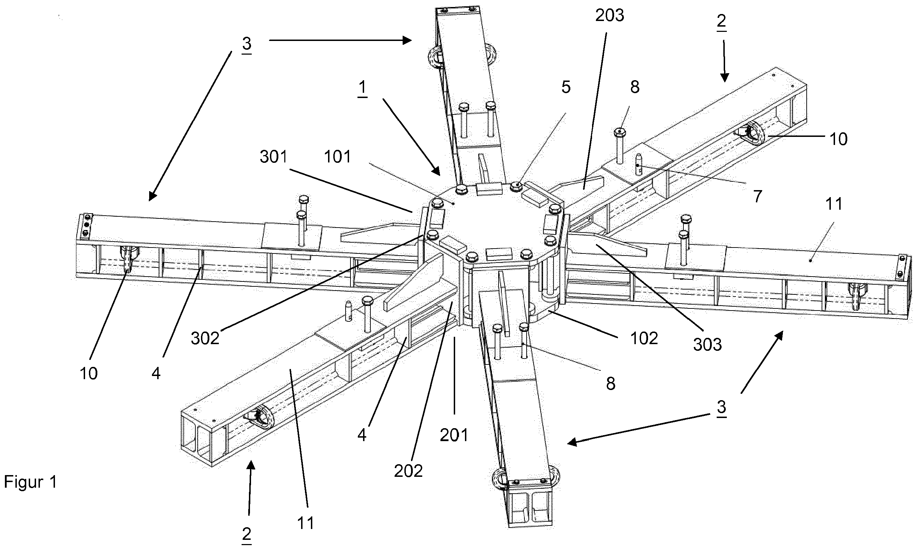

In Figur 1 wird eine erfindungsgemäße Transportvorrichtung in einer perspektivischen Darstellung gezeigt. Die Transportvorrichtung besteht aus Stahlblech und ist in ihrer Dimensionierung sowohl der Größe einer zu transportierenden Rotornabe RN als auch den Erfordernissen des zu benutzenden Transportmittels angepasst.

Die Transportvorrichtung besteht aus einem Mittelteil 1 und mehreren mit dem Mittelteil 1 verbundenen Trägern. Zwei Hauptträger 2 sind mit dem Mittelteil 1 fest und vier Nebenträgern 3 lösbar verbunden, wobei die Hauptträger 2 und die Nebenträger 3 zusammen einen Trägerstern bilden. Die Hauptträger 2 und die Nebenträger 3 sind somit sternförmig an dem Mittelteil 1 angeordnet. Die Nebenträger 2 können zueinander in einem Winkel zwischen 80 und 100 Grad angeordnet sein. Das Mittelteil 1 besteht aus zwei übereinander angeordneten Platten 101, 102 mit einer achteckigen Oberfläche. Die geometrische Form ist dabei nicht ausschlaggebend und kann ebensogut rund oder sechseckig sein. Die Platten 101, 102 werden durch die mit den Platten 101, 102 verschweißten Hauptträger 2 und Verbindungsmittel 5, beispielsweise Schrauben oder Bolzen, definiert auf Abstand gehalten. Die Hauptträger 2 und die Nebenträger 3 sind versteifte Doppel-T-Träger in einer langgestreckten Form, wobei zwischen einem Obergurt 11 und einem Untergurt der Doppel-T-Träger die Versteifung durch zusätzliche Rippen 4 erfolgt. Die zwei Hauptträger 2 sind sich an dem Mittelteil 1 gegenüber liegend an ihrer Stirnfläche 201 über ein Fixierblech 202 befestigt, welches die Breite des Hauptträgers 2 aufweist. Die Höhe des Fixierblechs 202 entspricht dem Abstand der zwei übereinander angeordneten Platten 101, 102 des Mittelteils 1. Der Hauptträger 2 kann mit Versteifungsmitteln versehen sein. Ein derartiges Versteifungsmittel ist eine Versteifungsrippe 203, welche senkrecht auf dem Hauptträger 2 steht und mit diesem und dem Fixierblech 202 fest verbunden ist. Beidseitig neben den Hauptträgern 2 ist jeweils ein Nebenträger 3 mit seiner Stirnfläche 301 an dem Mittelteil 1 lösbar und zeitweise, d.h. bei Bedarf, beweglich angeordnet. Die Nebenträger 3 sind an einer Stirnfläche 301 mit einem senkrecht zum Nebenträger 3 fest angeordneten Fixierblech 302 verbunden. Das Fixierblech 302 hat die Breite des Nebenträgers 3 und die Höhe entspricht dem Abstand der zwei übereinander angeordneten Platten 101, 102 des Mittelteils 1. Die Nebenträger 3 können ebenfalls mit Versteifungsmitteln versehen sein. Dazu steht auch hier eine Versteifungsrippe 303 senkrecht auf dem Nebenträger 3 und ist mit diesem und dem Fixierblech 302 fest verbunden. An dem Fixierblech 302 des Nebenträgers 3 sind zum Mittelteil 1 gerichtete Laschen 6 angeordnet, welche jeweils unten und oben mit dem Fixierblech 302 des Nebenträgers 3 fest verbunden sind und so dimensioniert sind, dass sie zwischen den übereinander angeordneten Platten 101, 102 des Mittelteils 1 positioniert werden können. Die Laschen 6 können jeweils als eine durchgehende Lasche 6 ausgeführt sein, bevorzugt werden aber zwei untere und zwei obere Laschen 6 angeordnet. Die Laschen 6 sind mit Ösen 601 versehen. Das Verbinden der Nebenträger 3 mit dem Mittelteil 1 erfolgt mittels der Verbindungsmittel 5, beispielsweise über Schraub- oder Bolzenverbindungen, durch Platten 101, 102 des Mittelteils 1 und die Ösen 601 der Laschen 6. Dazu ist das Mittelteil 1 mit Bohrlöchern 103, korrespondierend zu den Ösen 601 in den Laschen 6, versehen. Es entsteht eine lösbare Verbindung, welche auch als Scharnier genutzt werden kann. Auf den Hauptträgern 2 ist jeweils ein Führungsdorn 7 in einem definierten Abstand zum Mittelteil 1 angeordnet, z.B. eingeschraubt, und mittels Kontermuttern gegen Herausdrehen gesichert. Die Führungsdorne 7 ragen aus dem Obergurt 11 des Hauptträgers 2 heraus, z.B. 110mm. Parallel zu den Führungsdornen 7 ist auf den Hauptträgern 2 jeweils ein weiteres Haltemittel 8, bevorzugt eine Sechskant-Schraube, vorgesehen. Ebenso sind auf den Nebenträgern 3, an der gleichen Position und mit dem gleichen Abstand zum Mittelteil 1 weitere Haltemittel 8, bevorzugt jeweils zwei nebeneinander liegende, angeordnet. Diese Haltemittel 8 dienen der Sicherung der Rotornabe RN beim Transport. Die Führungsdorne 7 und die Haltemittel 8 korrespondieren mit den Befestigungslöchern an der Rotornabe RN, insbesondere mit den Befestigungslöchern eines Rotorblatts oder des Wellenflanschs. Um die Transportvorrichtung variabel nutzen zu können, können die Führungsdorne 7 und die Haltemittel 8 in mehreren Abständen zum Mittelteil 1 positionierbar sein, wobei auf dem Obergurt 11 der Hauptträger 2 und der Nebenträger 3 entsprechende Bohrungen vorgesehen sein können. An der Transportvorrichtung sind an jedem Haupt- und Nebenträger Anschlagpunkte 10 zur Ladungssicherung für den Transport vorgesehen.

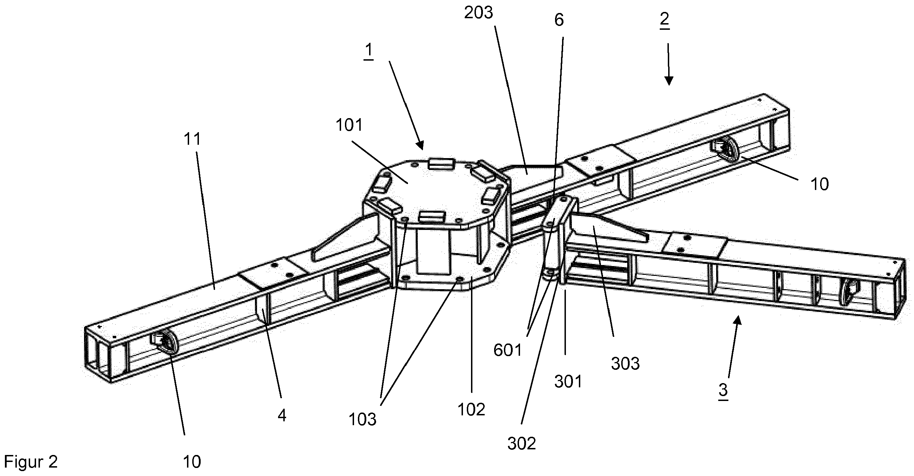

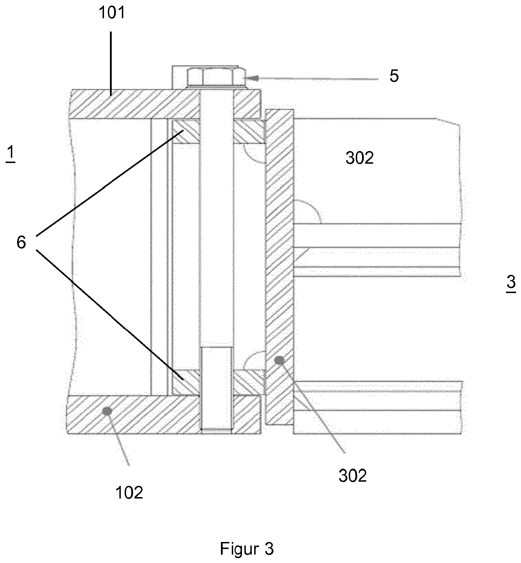

Figur 2 zeigt die Transportvorrichtung vor dem vollständigen Zusammenbau. Das Mittelteil 1 und die Hauptträger 2 sind bereits miteinander verbunden. Ein Nebenträger 3 wird mit dem Mittelteil 1 über die Verbindungsmittel 5 verbunden. Die Verbindung des Mittelteils 1 mit einem angeschraubten Nebenträger 3 zeigt Figur 3 in einer Schnittdarstellung. Die zwei unteren und zwei oberen Laschen 6 der Nebenträger 3 werden in das Mittelteil 1 geschoben und mittels der Verbindungsmittel 5 gesichert. Dadurch entsteht eine feste, aber lösbare Verbindung von Mittelteil 1 und Nebenträger 3. In diesem Ausführungsbeispiel sind die Verbindungsmittel 5 Sechskant-Schrauben. Es ist aber auch denkbar, dass andere Verbindungsmittel 5, wie Sicherungsbolzen, zur Anwendung kommen.

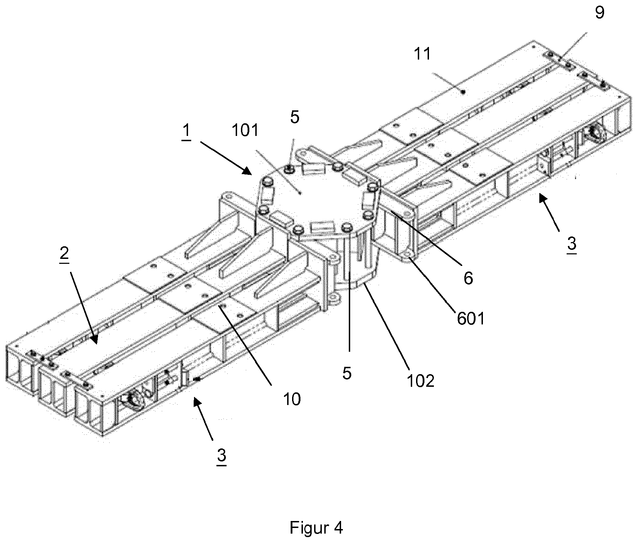

Die Transportvorrichtung ist so ausgelegt, dass sie für einen Rücktransport, beispielsweise in die Produktion, kompakt zusammengeklappt werden kann. In diesem Fall sollen keine Komponenten transportiert werden. Figur 4 stellt eine solche zusammengeklappte Transportvorrichtung dar. Das Mittelteil 1 und die zwei Hauptträger 201 bilden das Grundgerüst, an welche jeweils zwei Nebenträger 3 geklappt werden. Dazu werden die vier Verbindungsmittel 5 vom Mittelteil 1 entfern, welche dem Hauptträger 2 abgewandt sind, sodass die Nebenträger 3 lediglich durch jeweils ein Verbindungsmittel 5 gesichert sind. Nach dem Zusammenklappen der Transportvorrichtung werden die Nebenträger 3 mit den Hauptträgern 2 mittels Verbindungsblechen 9 verbunden und dadurch gesichert. Vorteilhafterweise sind die Verbindungsbleche 9, bevorzugt auf jeder Seite zwei, an den dem Mittelteil 1 abgewandten Enden mit den Hauptträgern 2 und den Nebenträgern 3 verschraubt. Dies kann sowohl auf dem Obergurt 11 als auch an den Stirnflächen 201, 301 der Hauptträger 2 und der Nebenträger 3 erfolgen. Bei Nichtgebrauch der Verbindungsbleche 9 können diese beispielsweise auf den Nebenträgern 3 gesichert abgelegt sein. Ebenso können die Führungsdorne 7 und die Haltemittel 8 an den Hauptträgern 2 oder den Nebenträgern 3 gesichert verstaut werden.

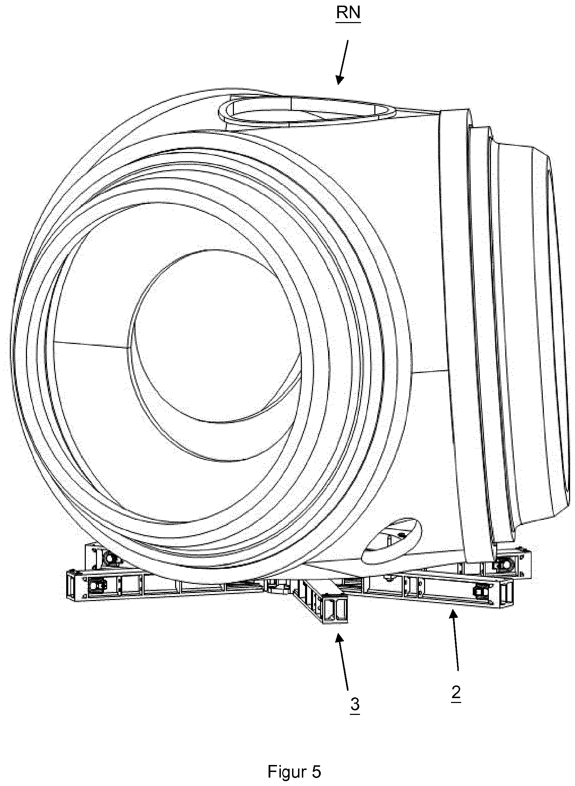

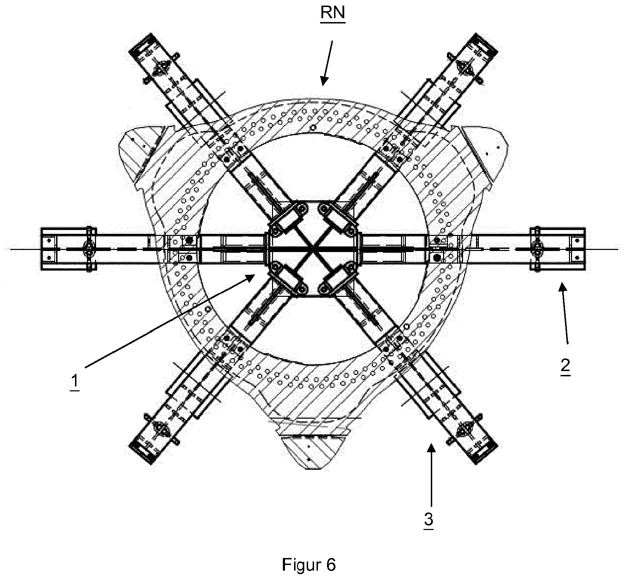

Die Figur 5 zeigt eine Darstellung einer Anordnung der Rotornabe RN auf der Transportvorrichtung und Figur 6 zeigt eine Draufsicht zu der Darstellung in Figur 5. Die Rotornabe RN wird mittels eines Hebezeugs ausgerichtet und mit dem Wellenflansch auf die zwei Führungsdorne 7 der Transportvorrichtung abgelegt und befestigt. Das Befestigen der Rotornabe RN an der Transportvorrichtung erfolgt über die zehn Haltemittel 8, beispielsweise über Schraubverbindungen.

Die Transportvorrichtung kann für den gesamten Lebenszyklus einer Rotornabe RN von der Produktion bis auf die Baustelle und umgekehrt, beispielsweise bei einer Reparatur der Rotornabe RN, zur Anwendung kommen. In der Produktion wird die Transportvorrichtung mit dem Rotornabengrundkörper verbunden und läuft so über die gesamte Fertigungslinie bis hin zum Abtransport. Es ist sinnvoll, für den Transport auf den Hauptträgern 2 und den Nebenträgern 3 eine Antirutschmatte unterhalb der Rotornabe RN zu positionieren.

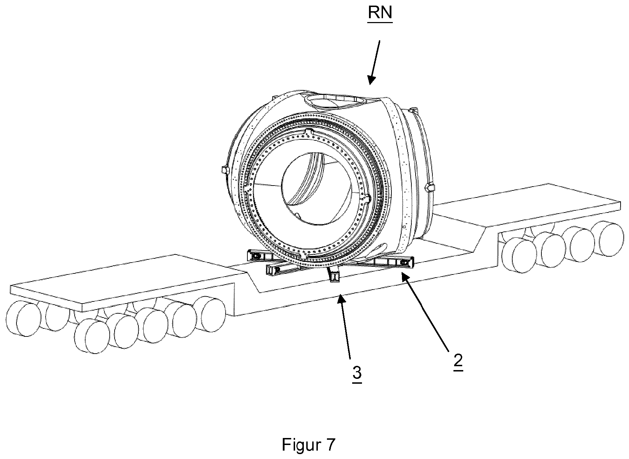

Figur 7 zeigt eine schematische Darstellung für einen Transport auf der Straße. Die Rotornabe RN wird mit der Transportvorrichtung auf einen für die Last zugelassenen Trailer abgesetzt. Im Bereich der Trägerenden und im Bereich des Trägerkreuzes sollte vollflächig mit Antirutschmatten unterfüttert werden. Die Ladungssicherung während des Straßentransportes erfolgt mittels handelsüblicher Zurrketten an der Transportvorrichtung, auf welcher die Rotornabe RN befestigt ist. Die Zurrketten werden an Lastböcken der Transportvorrichtung horizontal und über Kreuz an den Trailer eingehängt und verspannt. Zusätzlich wird die Rotornabe RN mit Zurrketten vertikal in ihrer Lage gesichert.

Bei einem Seetransport wird die Rotornabe RN zusammen mit der Transportvorrichtung direkt auf das Schiffsdeck verladen. Die Ladungssicherung wird hier über mit dem Schiffsdeck verschweißten Blechen realisiert.

Bei Errichtung einer Windenergieanlage werden die Haltemittel 8 von der Transportvorrichtung gelöst und die Rotornabe RN ist über die Führungsdorne 7 gesichert. Beim Abheben der Rotornabe RN von der Transportvorrichtung verhindern die Führungsdorne 7 ein Beschädigen der GFK-Verkleidung.

Die Transportvorrichtung kann ebenso bei einem Rückbau der Windenergieanlage genutzt werden; die Transportvorrichtung wird dann wieder aufgeklappt, verschraubt und die Rotornabe RN auf die Führungsdorne 7 aufgesetzt.

### Bezugszeichen

- RN: Rotornabe

- 1: Mittelteil
101, 102 Platten
103 Bohrlöcher
- 2: Hauptträger
201 Stirnfläche
202 Fixierblech
203 Versteifungsrippe
- 3: Nebenträger
301 Stirnfläche
302 Fixierblech
303 Versteifungsrippe
- 4: Rippen
- 5: Verbindungsmittel
- 6: Laschen an den Nebenträgern 3
601 Ösen
- 7: Führungsdorn
- 8: Haltemittel
- 9: Verbindungsblech
- 10: Anschlagpunkte
- 11: Obergurt

## Patentansprüche

1. Transportvorrichtung für eine Rotornabe (RN) einer Windenergieanlage, welche ein Mittelteil (1) und mehrere mit dem Mittelteil (1) verbundene Träger umfasst, wobei die Träger als Hauptträger (2) und Nebenträger (3) sternförmig um das Mittelteil (1) angeordnet sind, wobei die Nebenträger (3) lösbar und zeitweise beweglich in Richtung Hauptträger (2) sind, wodurch die Transportvorrichtung eine kompakte, zusammenklappbare Einheit bildet.

2. Transportvorrichtung nach Anspruch 1, **dadurch gekennzeichnet, dass** zwei Hauptträger (2) sich gegenüber liegend mit ihren Stirnflächen seitlich am Mittelteil (1) fest angeordnet sind und
dass beidseitig von den Hauptträgern (2) jeweils ein Nebenträger (3) mit seiner Stirnfläche mit dem Mittelteil (1) lösbar verbunden und bei Bedarf beweglich angeordnet ist.

3. Transportvorrichtung nach Anspruch 1 oder 2, **dadurch gekennzeichnet, dass**
jeder Nebenträger (3) an der Stirnfläche mit dieser fest verbundene Laschen (6) aufweist, durch welche die Nebenträger (3) mittels Verbindungsmittel (5) mit dem Mittelteil (1) verbunden sind.

4. Transportvorrichtung nach Anspruch 1 oder 2, **dadurch gekennzeichnet, dass**
jeder Hauptträger (2) in einem definierten Abstand zum Mittelteil (1) jeweils einen Führungsdorn (7) aufweist, welcher aus dem Obergurt (11) des Hauptträgers (2) herausragt und
dass neben den Führungsdornen (7) auf jedem Hauptträger (2) jeweils ein Haltemittel (8) angeordnet ist, und
dass auf jedem Nebenträger (3) in dem gleichen definierten Abstand zum Mittelteil (1) weitere Haltemittel (8) angeordnet sind,
wobei Führungsdorne (7) und Haltemittel (8) mit Befestigungslöchern an der Rotornabe (RN) korrespondieren.

## Claims

1. Transport device for a rotor hub (RN) of a wind turbine, which comprises a central part (1) and multiple supports connected to the central part (1), wherein the supports are arranged as main supports (2) and secondary supports (3) in a star-shaped manner around the central part (1), wherein
the secondary supports (3) are releasable and at times movable in the direction of the main support (2), whereby the transport device forms a compact foldable unit.

2. Transport device according to Claim 1, **characterized in that**
two main supports (2) are, with their end surfaces, fixedly arranged laterally on the central part (1) so as to be opposite one another, and
**in that**, on both sides of the main supports (2), in each case one secondary support (3) is, with its end surface, releasably connected to the central part (1) and arranged so as to be movable according to requirement.

3. Transport device according to Claim 1 or 2, **characterized in that**
each secondary support (3) has on the end surface brackets (6) which are fixedly connected to said end surface and by way of which the secondary supports (3) are connected to the central part (1) by means of connecting means (5).

4. Transport device according to Claim 1 or 2, **characterized in that**
each main support (2) has, at a defined distance from the central part (1), in each case one guide pin (7), which projects from the top chord (11) of the main support (2), and
**in that**, adjacent to the guide pins (7), there is arranged on each main support (2) in each case one holding means (8), and
**in that**, on each secondary support (3), further holding means (8) are arranged at the same defined distance from the central part (1),
wherein guide pins (7) and holding means (8) correspond to fastening holes at the rotor hub (RN).

## Revendications

1. Dispositif de transport pour un moyeu de rotor (RN) d'une éolienne, comprenant une partie centrale (1) et plusieurs supports reliés à la partie centrale (1), dans lequel les supports sous la forme de supports principaux (2) et de supports secondaires (3) sont disposés en étoile autour de la partie centrale (1), les supports secondaires (3) étant amovibles et par moments mobiles en direction des supports principaux (2) de sorte que le dispositif de transport constitue une unité compacte repliable.

2. Dispositif de transport selon la revendication 1, **caractérisé en ce que** les deux supports principaux (2) sont disposés en vis-à-vis en étant fixés latéralement à la partie centrale (1) par leurs surfaces frontales, et
**en ce que** des deux côtés des supports principaux (2), respectivement un support secondaire (3) est relié à la partie centrale (1) de manière amovible par sa surface frontale et mobile si nécessaire.

3. Dispositif de transport selon la revendication 1 ou 2, **caractérisé en ce que** chaque support secondaire (3) présente sur la surface frontale des pattes (6) reliées solidement à celle-ci, par lesquelles les supports secondaires (3) sont reliés à la partie centrale (1) à l'aide de moyens de connexion (5).

4. Dispositif de transport selon la revendication 1 ou 2, **caractérisé en ce que**
chaque support principal (2) présente à une distance définie de la partie centrale (1) respectivement une broche de guidage (7) qui fait saillie du brin supérieur (11) du support principal (2), et
**en ce qu'**à côté des broches de guidage (7), respectivement un moyen de maintien (8) est disposé sur chaque support principal, et
**en ce que** des moyens de maintien supplémentaires (8) sont disposés sur chaque support secondaire (3) à la même distance définie de la partie centrale (1), les broches de guidage (7) et les moyens de maintien (8) correspondant à des trous de fixation sur le moyen de rotor (RN).
